# EUROPEAN PATENT SPECIFICATION

(11) **EP 1 374 142 B1**
(45) Date of publication and mention of the grant of the patent: **28.07.2010**
(21) Application number: 02715034.1
(22) Date of filing: 05.03.2002
(51) Int. Cl.: G06K 7/10

(54) **AN OPTICAL SCANNER DATA COLLECTION NETWORK EMPLOYING MULTI-PACKET TRANSMISSION OF DECODED DATA**
DATENNETZWERK MIT OPTISCHEN SCANNERN ZUM ÜBERTRAGEN VON DECODIERTEN DATEN IN FORM VON MEHRFACHEN PAKETEN
RESEAU DE CAPTURE DE DONNEES PAR LECTEURS OPTIQUES TRANSMETTANT DES DONNEES DECODEES PAR PAQUETS MULTIPLES

(30) Priority: 06.03.2001 US 799967
(43) Date of publication of application: 02.01.2004
(73) Proprietor: Hand Held Products, Inc., Skaneateles Falls, NY 13153 (US)
(72) Inventor: MARRS, David, Syracuse, NY 13215 (US); HUSSEY, Robert, M., Camillus, NY 13031 (US); WALCZYK, Joseph, Syracuse, NY 13219 (US); HOLZHAUER, David, M., Camillus, NY 13031 (US); PANKOW, Matthew, Camillus, NY 13031 (US); DUEKER, Todd, Rochester, N.Y. 14616 (US); RUHLMAN, Thomas, Skaneateles, NY 13152 (US); PETTINELLI, John, Rome, NY 13440 (US)
(74) Representative: Hauck Patent- und Rechtsanwälte
(86) International application number: PCT/US2002/006542
(87) International publication number: WO 2002/073513

(56) References cited:
- US-A- 5 142 550
- US-A- 5 514 861
- US-A- 5 739 518
- US-A- 5 965 863

## Description

### Background of the Invention

### Field of the Invention

The present invention relates generally to data collection networks, and particularly to data collection networks that employ optical scanners as data input terminals.

### Technical Background

Data collection networks that use optical bar code scanners as input terminals are being employed in an ever-expanding variety of work environments. Examples of such network applications include retail, shipping, work-in-progress tracking, inventory control, manufacturing, route accounting, and health care. The sophistication of the networks and bar code scanners have grown markedly to keep pace with this demand.

One area of sophistication relates to wireless networks. The demand for cordless optical scanners operating in a wireless environment is increasing. Many of the new optical scanner applications require freedom of movement. The presence of an electrical cord tethering the optical scanner to a base terminal can be very problematic. In manufacturing or industrial applications, the cord may become entangled in assembly lines or in other machinery having moving parts.

The cordless optical scanners currently on the market have the capability to read optical symbols having limited data capacity. The scanner reads the symbol and refers to a look-up table in memory to retrieve the information corresponding to the symbol. 2D optical codes have been developed to carry large amounts of information, obviating the need for scanners to perform code conversions using look-up tables. Portable data file optical codes, for example, have maximum data capacities exceeding 1,000 bytes of information. PDF 417 can accommodate 2710 digits of information. Code One has a maximum data capacity of 1478 bytes. DataMatrix and MaxiCode symbols have similar data capacities. Unfortunately, currently available cordless optical scanners, and the data collection networks employing them, do not have the data transmission capabilities required to accommodate these large data codes.

US ,142,550 which is regarded as closest prior art document, discloses a packet data transmission system which is used to link a number of remote hand-held data-gathering units such as bar code readers to a central computer which maintains a data base management system. Data packets are sent from the remote units by an RF link to intermediate base stations, then sent by the base stations to the central computer by a serial link. Direct sequence spread spectrum modulation is used for the RF link. The remote hand-held units initiate an exchange using RF transmission to and from the base stations, receiving only during a rigid time window following a transmission from the remote unit. The base stations cannot initiate communication to the remote units, but instead send data to the remote units only as part of the exchange.

Thus, there is a need for an optical scanner data collection network that can accommodate 2 D data codes containing large amounts of information. A data collection network is needed to provide users with the data capacity required to perform increasingly complex tasks in an untethered working environment.

### Summary of the Invention

The above problem is solved by a data collection network according to independent claim 1 and a method for transmitting information contained in an optical symbol using a wireless network according to independent claim 43. Additional modifications and further developments of the present invention are derivable from the specification, the drawings and the dependent claims.

The existing problems of conventional optical scanners and data collection networks are addressed by the present invention. The present invention relates to multi-packet transmission of decoded data using RF scanners. The present invention also provides a data collection network that can accommodate 2D data codes containing large amounts of information. The data collection network of the present invention provides users with the data transmission capacity required to perform increasingly complex tasks in an untethered working environment.

One aspect of the present invention is a cordless optical scanner for reading a 2D optically encoded symbol. The optical scanner converts the 2D optically encoded symbol into decoded data. The optical scanner includes a packet assembly component operative to convert the decoded data into a plurality of packets. A communications component is coupled to the packet assembly component. The communications component is operative to transmit the plurality of packets to a base terminal.

In another aspect, the present invention includes a data collection network having at least one cordless optical scanner. The optical scanner is operative to convert a 2D optical symbol into a plurality of data packets for transmission over an RF channel. A base terminal is coupled to the at least one cordless optical scanner via the RF channel. The base terminal is operative to reassemble the plurality of packets into decoded data.

In another aspect, the present invention includes a method for transmitting information contained in a 2D optical symbol using a wireless network. The wireless network includes at least one cordless optical scanner and a base terminal. The method includes reading the 2D optical symbol with the cordless optical scanner to thereby generate decoded data. The decoded data is assembled into a plurality of packets. At least one packet of the plurality of packets includes at least 200 bytes of decoded data. The plurality of packets are transferred from the cordless optical scanner to the base terminal over an RF channel. The received plurality of packets are converted into the decoded data.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description are merely exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operation of the invention.

### Brief Description of the Drawings

Figure 1 is a perspective view of the optical scanner data collection network according to the present invention;
Figure 2 is a block diagram of the optical scanner according to the present invention;
Figure 3 is a diagram representing the memory map of the optical scanner according to the present invention;
Figure 4A is a diagrammatic depiction of a data packet used to transmit decoded data from an optical scanner to a base terminal when only one data packet is required;
Figure 4B is a diagrammatic depiction of a header packet and a data packet used to transmit decoded data from an optical scanner to a base terminal when more than one data packet is required;
Figure 5 is an exemplary optical scanner flow chart according to the present invention;
Figure 6 is a block diagram of the base terminal according to the present invention;
Figure 7 is a diagram representing the memory map of base terminal 40 according to the present invention;
Figure 8 is a diagram showing the structure of a scanner-application look-up table disposed in the memory of the base terminal;
Figure 9 is a chart showing the structure of an application-parameter look-up table disposed in the memory of the base terminal; and
Figure 10 is an exemplary base terminal flow chart according to the present invention.

### Detailed Description of the Invention

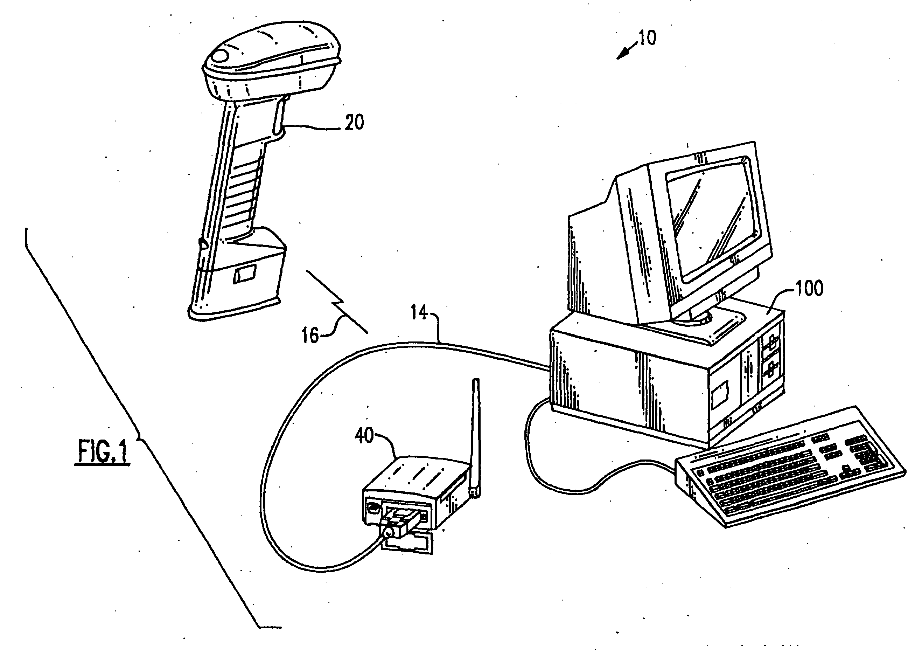

Reference will now be made in detail to the present preferred embodiments of the invention, examples of which are illustrated in the accompanying drawings. Wherever possible, the same reference numbers will be used throughout the drawings to refer to the same or like parts. An exemplary embodiment of the data collection network of the present invention is shown in Figure 1, and is designated generally throughout by reference numeral 10.

In accordance with the invention, the present invention for a data collection network includes a cordless optical scanner 20 for reading a 2D optically encoded symbol. The optical scanner converts the 2D optically encoded symbol into decoded data. The optical scanner includes a packet assembly component operative to convert the decoded data into a plurality of packets. A communications component transmits the packets to a base terminal. The present invention provides a data collection network that accommodates 2D data codes containing large amounts of data. The data collection network of the present invention provides users with the data transmission capacity required to perform increasingly complex data collection tasks in an untethered working environment.

As embodied herein, and depicted in Figure 1, a perspective view of the optical scanner data collection network 10 according to the present invention is shown. Data collection network 10 includes N-cordless optical scanners 20 coupled to base terminal 40 by means of radio link 16. Base terminal 40 is connected to host computer 100 by communications link 14. As shown, the optical scanner is a portable self-contained hand-held unit that is capable of scanning and decoding optically encoded symbols. Typically the host computer 100 is provided by the user to further process data collected by base terminal 40.

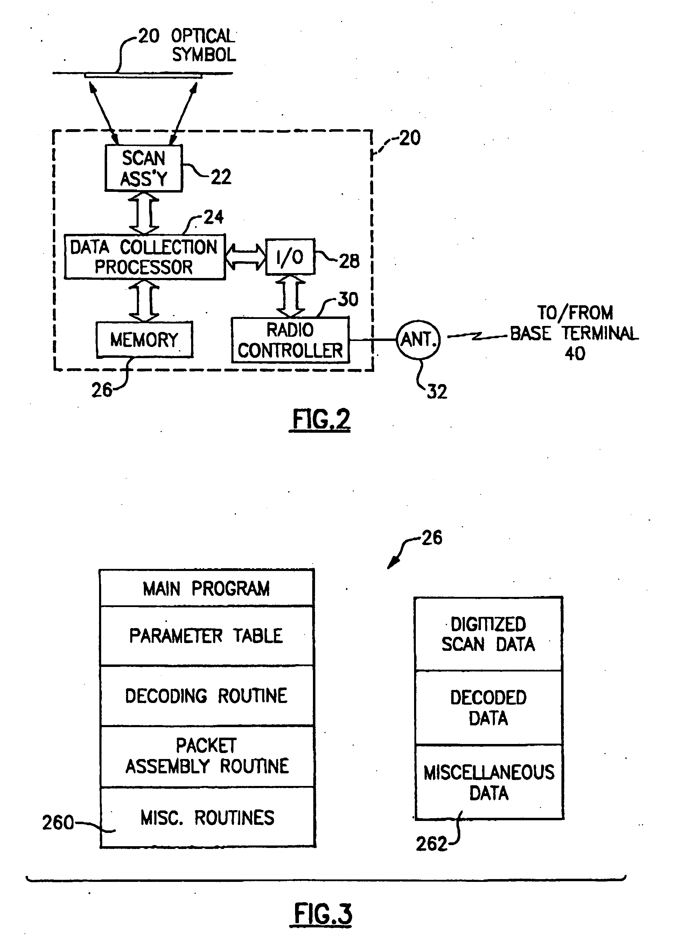

As embodied herein and depicted in Figure 2, a block diagram of the optical scanner 20 according to the present invention is shown. Cordless scanner 20 includes scan assembly 22, which is connected to processor 24. Processor 24 is connected to memory 26 and I/O port 28. I/O port 28 is connected to radio controller 30. Radio controller 30 is likewise connected to antenna 32.

Scan assembly 22 includes a light source and optics to illuminate the optical symbol. Reflected light returning from the optical symbol is captured by a photodetector element and converted into analog electrical signals representative of the optical symbol. Scan assembly 22 also includes signal processing electronics that digitize the analog signals. It will be apparent to those of ordinary skill in the pertinent art that modifications and variations can be made to scan assembly 22 of the present invention depending on cost and component selection. For example, scan assembly 22 may be image sensor based or laser based. Further, scan assembly 22 may be a linear scanner or an area scanner. A linear scanner captures one row of the 2D symbol at a time, whereas an area scanner captures an image of the entire 2D symbol with one scan.

It will be apparent to those of ordinary skill in the pertinent art that processor 24 may be of any suitable type, but by way of example, processor 24 includes an 8-bit microcomputer having an address space 64K bytes. Processor 24 uses the firmware stored in memory 26 to perform the various tasks necessary to operate scanner 20. Processor 24 may also include an ASIC device to manage and optimize scan assembly 22 operations. The firmware resident in the memory 26 includes decoding component and a packet assembly component. The structure of memory 26 will be discussed below.

The communications component of optical scanner 20 includes radio controller 30. It will be apparent to those of ordinary skill in the pertinent art that radio controller 30 may be of any suitable type, but by way of example, radio controller 30 is adapted to provide frequency hopping spread spectrum communications (FHSS) between scanner 20 and base terminal 40. FHSS is a form of spread spectrum radio transmission that produces a narrow band signal that hops among a plurality of frequencies in a prearranged pattern. FHSS is often used in commercial environments because of its ability to minimize errors due to interference or jamming. However, those of ordinary skill in the art will recognize that optical scanners 20 and base terminal 40 may communicate using other wireless schemes and other modulation formats based on user requirements and environmental factors.

As embodied herein and depicted in Figure 3, a diagram representing the memory map of the optical scanner according to the present invention is shown. Memory 26 includes read only memory 260 for storing optical scanner firmware. Memory 260 may be of any suitable type, but there is shown by way of example a 32K Byte erasable programmable read only memory (EPROM) 260. Memory 260 includes a main program, a parameter table, decoding routine, packet assembly routine, and other miscellaneous routines that run on processor 24.
Memory 26 also includes data storage memory 262. Memory 262 may be of any suitable type, but there is shown by way of example 8K Bytes SRAM which is used by processor 24 for data storage. One portion of memory is used to store digitized scan data. Another portion is used to store the decoded data.

Referring back to memory 260, the parameter table specifies the values of the parameters defining the mode in which the reader will operate. Examples of these parameters include the size and the frame rate of the scan assembly image sensor, the codes that will be enabled during autodiscrimination, communication protocols, beeper pitch and volume. As will be discussed more fully below, the subset of parameter values populating the scanner parameter table are chosen in accordance with the selected application. A complete set of application parameters are stored in base terminal 40 memory. Base terminal 40 uploads the subset of parameter values to scanner 20.

The decoding routine is also stored in firmware. It uses parameters stored in the parameter table. Thus, the decoding routine can be modified by these parameters to decode any number of 2D optical symbols such as PDF 417, microPDF, Code One, DataMatrix or MaxiCode. The present invention also applies to stacked linear symbols and matrix symbols. This list is not all-inclusive. Any type of symbol can be used in conjunction with network 10.

By way of example, the decoding routine for PDF417 symbols will be discussed. The firmware operates on a PDF417 symbol according to a two step process. The first step of the process is row decoding. This step includes locating sequences of PDF417 symbol characters adjoining a stop or start character. This process is complicated by a phenomenon known as scan-stitching wherein the scan path slides from row to row generating invalid characters. The decoding process takes advantage of the fact that all characters start with a space-to-bar transition that is aligned across rows.

The second step of the decoding process is array decoding. In array decoding, the decoded PDF417 characters are placed into appropriate positions in a row and column matrix. These rows are then considered as one concatenated string which is error checked and corrected to generate the decoded data message.

Subsequently, the decoded data message is assembled into one or more packets, depending on the length of the data embedded in the decoded symbol. This step is performed by the packet assembly routine. In one embodiment of the present invention, each packet can accommodate approximately 200 bytes of decoded data in a 256 byte packet. This is merely a representative example, and one of ordinary skill in the art will recognize that the scope of the present invention should not be limited to data packets of a certain size or format.

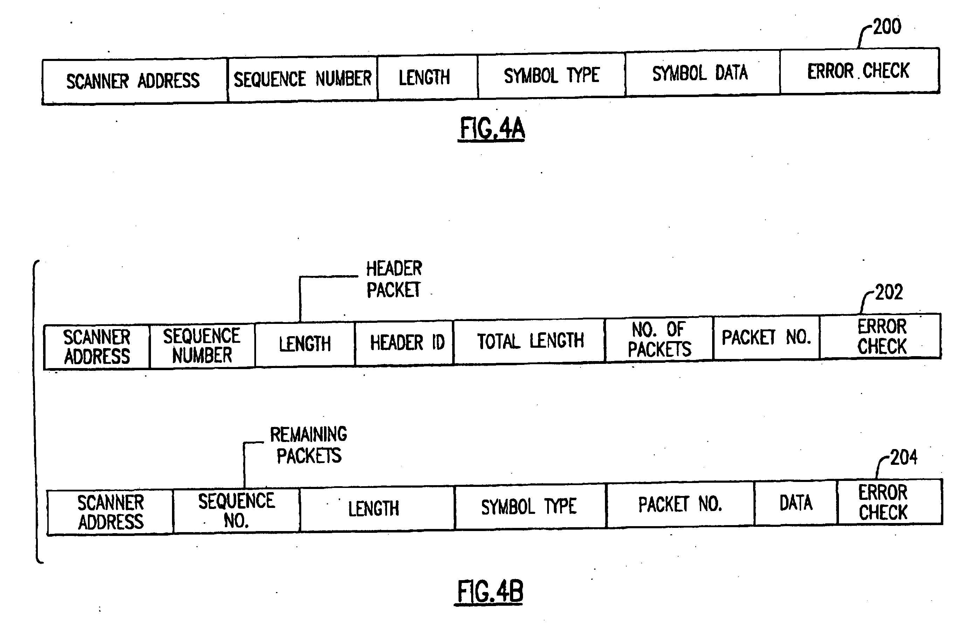

Figure 4A is a diagrammatic depiction of a data packet used to transmit decoded data from an optical scanner to a base terminal when only one data packet is required. A one packet message employs packet 200 which includes a scanner address field, sequence number field, a packet length field, a symbol type field, symbol data, and an error check field. The scanner address is a scanner identifier. Each scanner 20 numbers each packet with a sequence number, which is includes in the second field. The next field contains the length of the data field. After this, the packet contains a field identifying the type of symbol that was decoded. After the symbol type, the symbol data payload of the packet is inserted. Finally, packet 200 includes error checking bytes.

Figure 4B is a diagrammatic depiction of a header packet and a data packet used to transmit decoded data from an optical scanner to a base terminal when more than one data packet is required. When more than one packet is required, scanner 20 first transmits header packet 202. After base 40 acknowledges that it can process the remaining packets, scanner 20 transmits the remaining packets 204, which have the format of packet 204. If base 40 cannot process the remaining packets 204, or if there is another problem, base 40 will transmit an application packet to scanner 20 indicating the error. The definitions of the scanner address field, the sequence number field, symbol type, length, symbol data, and error check field were described above, and hence, will not be repeated. Header packet 202 also includes a header identification field, which identifies the packet as a header packet. In the next field, packet 202 includes a total length field, which includes the total length of the data contained in the decoded symbol. The next field includes the total number of packets in the message. The second-last field is the packet number. In the header packet, this number is designated as packet number "one." The remaining packets 204 also include a packet number field, which are incremented from 2 to N, depending on the total number of packets being transmitted in the message.

One of ordinary skill in the art will recognize that packet 200, packet 202, and packet 204 may be of any suitable type, the diagrammatic depictions in Figure 4A and Figure 4B are one embodiment of the present invention. The headers and field type can be implemented in a variety of ways.

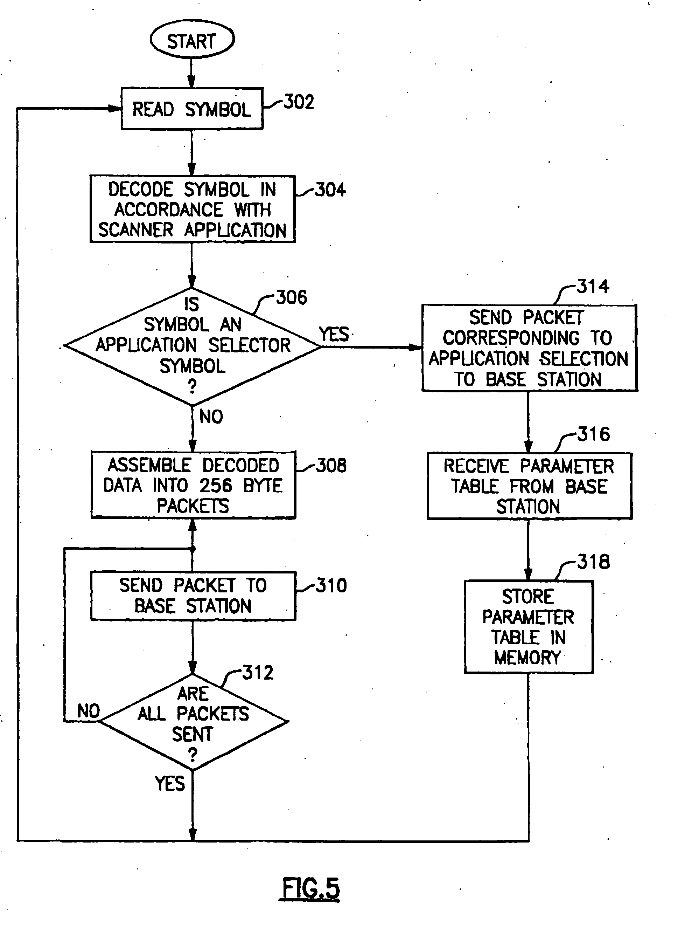

As embodied herein and depicted in Figure 5, an exemplary optical scanner flow chart 300 according to the present invention is disclosed. In step 302 the optical symbol is read. As discussed above, the image is captured and stored in memory 262 as digitized scan data. The digitized scan data is decoded in step 304, in accordance with the application being run on scanner 20. A PDF417 decoding process was discussed above. It will be apparent to those of ordinary skill in the pertinent art that microPDF, Code One, DataMatrix, MaxiCode or any other 2D symbol can also be decoded when practicing the present invention. After the symbol is decoded, processor 24 determines whether the symbol is an application selector symbol. Application selector symbols are used to reprogram scanner 20. If the symbol is an application selector symbol, a single packet containing the application selection information is sent to base terminal 40 in step 314. In step 316, base terminal 40 retrieves the corresponding parameter table subset and uploads it into scanner 20. In step 318, scanner 20 stores the new parameter table information in memory 260 or 262. Scanner 20 is equipped with a reprogramming routine in firmware which causes scanner 20 to operate in accordance with the new up-loaded parameter table values.

If the decoded symbol is not an application selector symbol, the scanner proceeds to block 308. The concatenated decoded data string is broken into decoded data payloads of approximately 200 bytes each. Of course, the last decoded data payload may only have a few bytes of data, depending on the message size. Block 308 generates headers 202 for each of the packets in the message. Subsequently, a payload is appended to its corresponding header. In block 310, each packet is sent to radio controller 30 via I/O port 28. Radio controller 30 transmits each packet to base terminal 40 until the entire message has been transmitted, in accordance with block 312.

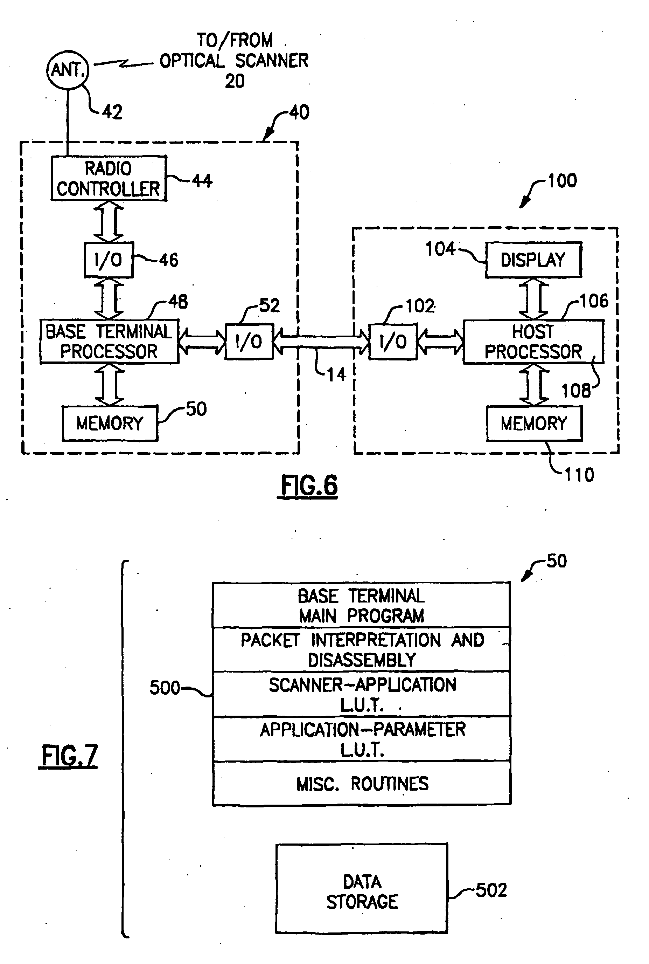

As embodied herein and depicted in Figure 6, a block diagram of base terminal 40 according to the present invention is depicted. Base terminal 40 transmits and receives messages from optical scanners 20 via antenna 42. Antenna 42 is connected to radio controller 44. Radio controller 44 is coupled to base terminal 48 via I/O port 46. Base terminal processor 48 is also connected to base terminal memory 50. Base terminal 40 also includes a second I/O port 52 that links processor 48 with host 100 via communications link 14.

As discussed above in conjunction with radio controller 30 of optical scanner 20, it will be apparent to those of ordinary skill in the pertinent art that radio controller 44 may be of any suitable type, but by way of example, radio controller 44 is adapted to provide frequency hopping spread spectrum communications (FHSS) between scanner 20 and base terminal 40. Again, those of ordinary skill in the art will recognize that optical scanners 20 and base terminal 40 may communicate using other wireless schemes and other modulation formats based on user requirements and environmental factors.

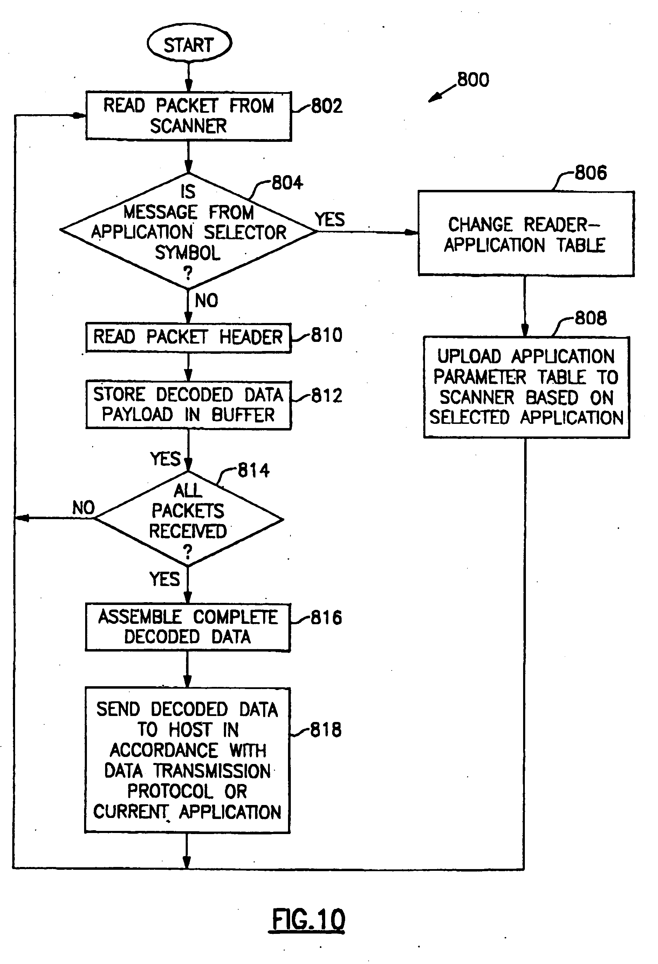

Base terminal processor 48 may be of any suitable type adapted to facilitate contemporaneous execution of a plurality of applications. Each scanner 20 in network 10 may operate according to any number of applications. Each application may specify different data collection protocols, e.g., one scanner may be programmed to decode PDF417 whereas another may be programmed to decoded Code One symbols and read at different data rates. Thus, base 40 is adapted to interface with a plurality of scanners 20 transmitting a plurality of packets. The packets received from scanners 20 are interlaced and appropriately sorted by base 40. The operation of base terminal 40 will be discussed below in conjunction with Figure 10.

As any skilled artisan will recognize, communications link 100 may be of any suitable type, but by way of example, base terminal 40 may be hard wired to host 100 via an RS-232 communications link. Link 14 may also be implemented using a "wedge" terminal disposed between base terminal 40 and host 100. In other embodiments, link 14 may be implemented using a LAN, or a universal serial bus.

Host computer 100 may include at least one high level data processing software program such as a graphical display program, a spreadsheet program, or word processing program for arranging, displaying and/or organizing the decoded data in accordance with the user's needs and requirements.

As embodied herein and depicted in Figure 7, a diagram representing the memory map of base terminal 40 according to the present invention is shown. Memory 50 includes erasable programmable read only memory (EPROM) 500, which is used for storing the base terminal firmware. Memory 500 includes a base terminal main program, a packet interpretation and disassembly routine, a scanner-application look-up table, an application-parameter look-up table, and other miscellaneous routines that run on processor 48.

Memory 50 also includes data storage memory 502. Memory 502 may be of any suitable type, but there is shown by way of example a SRAM which is used by processor 48 for data storage.

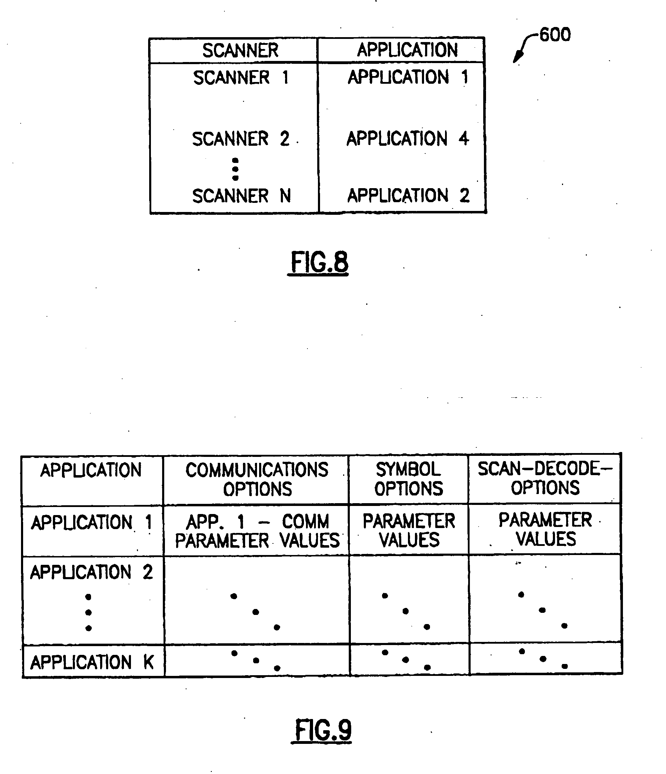

As embodied herein and depicted in Figure 8, a diagram showing the structure of a scanner-application look-up table 600 disposed in memory 500 is shown. Network 10 may include N-optical scanners 20. Theoretically, there can be an infinite number applications. Look-up-table (LUT) 600 correlates each scanner 20 in network 10 with the current application of each scanner 20 using suitable addressing identifiers. LUT 600 can be stored in any memory structure in network 10, but it is preferably stored in base terminal memory 50.

Figure 9 is a diagram showing the structure of an application-parameter look-up table 700 disposed in memory 500 of base terminal 40. Application parameter table 700 correlates each application with the parameters needed to control the various aspects of network operations. Further, application-parameter table 700 includes the plurality of parameters used to control symbology, scanning, decoding, and communications in optical scanners 20 for all of the applications supported by network 10.

As embodied herein and depicted in Figure 10, an exemplary base terminal flow chart according to the present invention is depicted. In block 802, base terminal 40 reads the packet transmitted by scanner 20. Base terminal 40 determines in block 804 whether the packet contains an application selector symbol request, or decoded data. If the packet is an application selector packet, base terminal 40 retrieves the parameter table subset corresponding to the requested application from LUT 700 (Figure 9), and changes the scanner-application LUT 600 accordingly. These actions are performed by blocks 806-808. If the packet is not an application selector packet, block 810 is performed and the remainder of the packet header is read. Thus, base terminal 40 identifies the scanner 20 from which the packet was sent, the current application being run on scanner 20, the message number, the number of packets in the message, and the number of the packet being evaluated. Using this information, the decoded data payload is stored in an appropriate place in data storage memory 502. In block 814, base terminal processor 48 determines whether all the packets in the message were received. If not, the processor waits for additional packets to be received. If all packets have been received, processor 48 assembles all of the decoded data payloads into a concatenated data string. Of course, the concatenated data string includes all of the data stored in the 2D optical symbol decoded by scanner 20. In block 818, base terminal 40 transmits the decoded data to host 100 via communications link 14.

It will be apparent to those skilled in the art that various modifications and variations can be made to the present invention without departing from the scope of the claims. Thus, it is intended that the present invention cover the modifications and variations of this invention provided they come within the scope of the appended claims.

## Claims

1. A data collection network comprising:
a plurality of cordless optical scanners (20), and
a base terminal (40) with an application parameter look-up table (700) stored therein, the look-up table storing application parameters for each of the plurality of the cordless optical scanners; wherein
at least one scanner of the plurality of cordless optical scanners (20) is configured to convert a 2D optical symbol into decoded data, and
to format the decoded data into a plurality of packets (202, 204),
the at least one scanner of the plurality of cordless optical scanners (20) is further configured to transmit a first packet (202) of the plurality of packets (202, 204) over a radio frequency channel (16) to the base terminal (40), and
the base terminal (40) is coupled to the at least one of the plurality of cordless optical scanners (20) over the radio frequency channel (16); and wherein
the base terminal (40) is operative to receive and reassemble the plurality of packets (202, 204) into decoded data, the data collection network being **characterized in that**
the first packet (202) of the plurality of packets (202, 204) contains a field designating the total length of the decoded data, and
the at least one scanner is further configurated to transmit an at least one second packet of the plurality of packets (202, 204) responsively to receiving an acknowledgment from the base terminal (40), the acknowledgment confirming the ability of the base terminal (40) to process the at least one second packet (204) of the plurality of packets (202, 204).

2. The data collection network of claim 1, wherein the base terminal (40) is configured to contemporaneously communicate with each of the plurality of optical scanners (20, 600).

3. The data collection network of claim 2, wherein application parameters include a type of 2D optical symbol being decoded by each of the plurality of optical scanners (20, 600).

4. The data collection network of claim 3, wherein the type of 2D optical symbol being decoded by the optical scanner (20, 600) is a portable data file symbol (PDF).

5. The optical scanner (20, 600) of claim 3, wherein the type of 2D optical symbol being decoded by the optical scanner (20, 600) is a PDF 417 symbol.

6. The optical scanner (20, 600) of claim 4, wherein the type of 2D optical symbol being decoded by the optical scanner (20, 600) is a micro PDF symbol.

7. The optical scanner (20, 600) of claim 3, wherein the type of 2D optical symbol being decoded by the optical scanner (20, 600) is a Code One symbol.

8. The optical scanner (20, 600) of claim 3, wherein the type of 2D optical symbol being decoded by the optical scanner (20, 600) is a DataMatrix symbol.

9. The optical scanner (20, 600) of claim 3, wherein the type of 2D optical symbol being decoded by the optical scanner (20, 600) is a MaxiCode symbol.

10. The data collection network of claim 2, wherein application parameters include transmission protocol data.

11. The data collection network of claim 2, wherein application parameters include optical scanner (20, 600) scanning rate data.

12. The data collection network of claim 2, wherein the base terminal (40) further comprises:
a base communications component (44) operative to receive the transmitted plurality of packets from the plurality of optical scanners (20, 600);
a base processor (48) coupled to the base communications component (44), the base processor (48) programmed to process the received plurality of packets (202, 204) to thereby recover the decoded data; and
a first base memory (50) coupled to the base processor (48), the first base memory (50) being operative to store the decoded data.

13. The data collection network of claim 12, wherein the base processor (48) further comprises:
a packet interpreter component (50), the interpreter component (50) operative to read at least one informational field of the packet, whereby the plurality of packets (202, 204) is processed in accordance with information retrieved from the at least one informational field,
a packet disassembler portion coupled to the packet interpreter component (50), the packet disassembler being operative to recover the decoded data portion; and
a message assembler coupled to the packet disassembler, the message assembler being operative to assemble the decoded data portion of each packet to thereby produce the decoded data.

14. The data collection network of claim 12, wherein the base communications component (44) further comprises:
a transmitter component adapted to upload control data to the plurality of optical scanners (20, 600); and
a receiver component adapted to receive the plurality of packets (202, 204) from the plurality of optical scanners (20, 600).

15. The data collection network of claim 1, further comprising a host computer (100) coupled to the base terminal (40), the host computer (100) being adapted to further process the decoded data.

16. The data collection network of claim 15, wherein the host computer (100) is coupled to the base terminal (40) by means of an RS-232 data link (14).

17. The data collection network of claim 15, wherein the host computer (100) is coupled to the base terminal (40) by means of a wedge terminal.

18. The data collection network of claim 15, wherein the host computer (100) is coupled to the base terminal (40) by means of a local area network (LAN) (14).

19. The data collection network of claim 15, wherein the host computer (100) is coupled to the base terminal (40) by means of a universal serial bus (14).

20. The data collection network of claim 1, where each of the plurality of packets (202, 204) includes a data structure including:
a first field including an optical scanner (20, 600) identifier, the optical scanner (20, 600) identifier identifying an optical scanner (20, 600);
a second field including an optical symbol identifier (200), the optical symbol identifier (200) identifying a type of optical symbol being decoded by the optical scanner (20, 600); and
a third field including error checking information (200), the error checking information (200) enabling a receiving base station (40) to check a received message for errors.

21. The data collection network of claim 20, wherein the data structure is included within a header packet (202) adapted to a multiple packet transmission format.

22. The data collection network of claim 21, wherein the data structure is included within a non-header packet (204) adapted to a multiple packet transmission format.

23. The data collection network of claim 20, wherein the data structure is included within a packet (202) adapted to a single packet transmission format.

24. The data collection network of claim 20, wherein the data structure includes a fourth field for containing symbol data (200), the symbol data (200) representing data contained in an optical symbol of the type identified by the optical symbol identifier (200).

25. The data collection network of claim 1 where the plurality of optical scanners (20, 600) comprises:
a packet assembly component operative to convert the decoded data into at least one packet; and
a communications component (30) coupled to the packet assembly component, the communications component being operative to transmit the plurality of packets (202, 204) to a base terminal (40).

26. The data collection network of claim 25, wherein the plurality of packets (202, 204) includes a header packet (202).

27. The data collection network of claim 26, wherein the header packet (202) includes decoded data if a transmission to the base terminal (40) includes only one packet.

28. The data collection network of claim 27, wherein the header packet includes at least an optical scanner identifier (200), a length of the decoded data, and error checking information (200).

29. The data collection network of claim 26, wherein the plurality of packets (202, 204) includes a non-header packet (204).

30. The data collection network of claim 29, wherein the non-header packet (204) includes a field identifying a type of 2D optically encoded symbol being read by the optical scanner (20, 600).

31. The data collection network of claim 30, wherein the 2D optically encoded symbol includes stacked linear symbols and matrix symbols.

32. The data collection network of claim 25, where the optical scanner (20, 600) further comprises:
a scan assembly (22) operative to read the 2D optically encoded symbol, whereby the symbol is converted into an electrical signal; and
a decoding component (26) coupled to the scan assembly and the packet assembly component (26), the decoding component converting the electrical signal into the decoded data.

33. The data collection network of claim 32, wherein the scan assembly (22) is a linear scan assembly.

34. The data collection network of claim 32, wherein the scan assembly is an area scan assembly.

35. The data collection network of claim 25, where the optical scanner (20, 600) further comprises:
a scan assembly operative to read the 2D optically encoded symbol, whereby the 2D optically encoded symbol is converted into an electrical signal;
a processor (24) coupled to the scan assembly (22), the processor being programmed to decode the electrical signal to thereby produce decoded data, assemble the decoded data into a plurality of packets (202, 204);
a modulator coupled to the processor, the modulator being operative to modulate the plurality of packets (202, 204) using a transmission protocol; and
a transmitter coupled to the modulator, the transmitter being operative to transmit the modulated plurality of packets (202, 204) over at least one frequency.

36. The data collection network of claim 25, wherein the 2D optically encoded symbol is a portable data file (PDF) symbol.

37. The data collection network of claim 36, wherein the portable data file symbol is a PDF 417 symbol.

38. The data collection network of claim 36, wherein the portable data file symbol is a micro PDF symbol.

39. The data collection network of claim 25, wherein the portable data file symbol is a Code One symbol.

40. The data collection network of claim 25, wherein the portable data file symbol is a DataMatrix symbol.

41. The data collection network of claim 25, wherein the portable data file symbol is a MaxiCode symbol.

42. The data collection network of claim 1, wherein the communications component includes a radio device (30) for modulating and transmitting the plurality of packets (202, 204) in accordance with a transmission protocol.

43. A method for transmitting information contained in an optical symbol using a wireless network, the wireless network including at least a plurality of cordless optical scanners (20) and a base terminal (40), the method comprising:
converting a 2D optical symbol into decoded data by means of a cordless optical scanner;
assembling the decoded data into a plurality of packets (202, 204);
transferring a first packet (202) of the plurality of packets (202, 204) over a radio frequency channel (16) to the base terminal (40), wherein the base terminal (40) is coupled to the at least one of the plurality of cordless optical scanners (20) over the radio frequency channel (16); and
receiving and reassembling the plurality of packets (202, 204) into decoded data by means of the base terminal (40), the method being **characterized by**
forming the first packet (202) of the plurality of packets (202, 204) such that it contains a field designating the total length of the decoded data, and
transmitting the at least one second packet of the plurality of packets (202, 204) responsively to receiving an acknowledgment from the base terminal (40), the acknowledgment confirming the ability of the base terminal (40) to process at least one second packet (204) of the plurality of packets (202, 204).

## Patentansprüche

1. Ein Datenerfassungsnetzwerk, umfassend:
eine Mehrzahl von schnurlosen optischen Scannern (20) und
einen Basisanschluss (40) mit einer darin gespeicherten Anwendungsparameternachschlagtabelle (700), wobei die Nachschlagtabelle Anwendungsparameter für jeden Scanner aus der Mehrzahl der schnurlosen optischen Scanner speichert, während
mindestens ein Scanner aus der Mehrzahl der schnurlosen optischen Scanner (20) konfiguriert ist, um ein 2D optisches Symbol in decodierte Daten umzuwandeln und
die decodierten Daten in eine Mehrzahl von Paketen (202, 204) zu formatieren, wobei der mindestens eine Scanner aus der Mehrzahl der schnurlosen optischen Scanner (20) weiterhin konfiguriert ist, um ein erstes Paket (202) aus der Mehrzahl der Pakete (202, 204) über einen Radiofrequenzkanal (16) zu dem Basisanschluss (40) zu übertragen, und
der Basisanschluss (40) ist an den mindestens einen aus der Mehrzahl der schnurlosen optischen Scanner (20) über den Radiofrequenzkanal (16) gekoppelt, während der Basisanschluss (40) wirksam ist, um die Mehrzahl von Paketen (202, 204) zu empfangen und in decodierte Daten wieder zusammenzusetzen, das Datenerfassungsnetzwerk ist **dadurch gekennzeichnet, dass**
das erste Paket (202) aus der Mehrzahl von Paketen (202, 204) ein Feld aufweist, das die Gesamtlänge der decodierten Daten bestimmt, und
der mindestens eine Scanner ist weiterhin konfiguriert, um mindestens ein zweites Paket aus der Mehrzahl von Paketen (202, 204) zu übertragen, das auf das Empfangen einer Bestätigung von dem Basisanschluss (40) reagiert, während die Bestätigung die Fähigkeit des Basisanschlusses (40) bestätigt, das mindestens eine zweite Paket (204) aus der Mehrzahl von Paketen (204, 202) zu verarbeiten.

2. Das Datenerfassungsnetzwerk gemäß Anspruch 1, während der Basisanschluss (40) konfiguriert ist, um mit jedem aus der Mehrzahl von optischen Scannern (20, 600) gleichzeitig in Verbindung zu stehen.

3. Das Datenerfassungsnetzwerk gemäß Anspruch 2, während die Anwendungsparameter einen Typ an 2D optischem Symbol aufweisen, der durch jeden aus der Mehrzahl der optischen Scanner (20, 600) decodiert wird.

4. Das Datenerfassungsnetzwerk gemäß Anspruch 3, während der Typ des 2D optischen Symbol, der durch den optischen Scanner (20, 600) decodiert wird, ein portables Datendateisymbol (PDF) ist.

5. Der optische Scanner (20, 600) gemäß Anspruch 3, während der Typ des 2D optischen Symbols, der durch den optischen Scanner (20, 600) decodiert wird, ein PDF 417 Symbol ist.

6. Der optische Scanner (20, 600) gemäß Anspruch 4, während der Typ des 2D optischen Symbols, der durch den optischen Scanner (20, 600) decodiert wird, ein Mikro-PDF-Symbol ist.

7. Der optische Scanner (20, 600) gemäß Anspruch 3, während der Typ des 2D optischen Symbols, der durch den optischen Scanner (20, 600) decodiert wird, ein Code eins Symbol (Code One symbol) ist.

8. Der optische Scanner (20, 600) gemäß Anspruch 3, während der Typ des 2D optischen Symbols, der durch den optischen Scanner (20, 600) decodiert wird, ein Datenmatrixsymbol (DataMatrix symbol) ist.

9. Der optische Scanner (20, 600) gemäß Anspruch 3, während der Typ des 2D optischen Symbols, der durch den optischen Scanner (20, 600) decodiert wird, ein Maxicodesymbol (MaxiCode symbol) ist.

10. Das Datenerfassungsnetzwerk gemäß Anspruch 2, während die Anwendungsparameter Übertragungsprotokolldaten umfassen.

11. Das Datenerfassungsnetzwerk gemäß Anspruch 2, während die Anwendungsparameter Scanratendaten des optischen Scanners (20, 600) umfassen.

12. Das Datenerfassungsnetzwerk gemäß Anspruch 2, während der Basisanschluss (40) weiterhin umfasst:
eine Basiskommunikationskomponente (44), die wirksam ist, um die übertragene Mehrzahl von Paketen von der Mehrzahl der optischen Scanner (20, 600) zu empfangen,
einen Basisprozessor (48), der an die Basiskommunikationskomponente (44) gekoppelt ist, während der Basisprozessor (48) programmiert ist, um die empfangene Mehrzahl von Paketen (202, 204) zu verarbeiten, um **dadurch** die decodierten Daten zurückzugewinnen, und
einen ersten Basisspeicher (50), der an den Basisprozessor (48) gekoppelt ist, während der erste Basisspeicher (50) wirksam ist, um die decodierten Daten zu speichern.

13. Das Datenerfassungsnetzwerk gemäß Anspruch 12, während der Basisprozessor (48) weiterhin umfasst:
eine Paketübersetzerkomponente (50), wobei die Übersetzerkomponente (50) wirksam ist, um mindestens ein Informationsfeld des Pakets zu lesen, wodurch die Mehrzahl von Paketen (202, 204) in Übereinstimmung mit Informationen verarbeitet wird, die von dem mindestens einen Informationsfeld abgefragt wurden,
einen Paketzerlegerbereich, der an die Paketübersetzerkomponente (50) gekoppelt ist,
während der Paketzerleger wirksam ist, um den decodierten Datenbereich wiederzuerlangen, und
einen Nachrichtenzusammensetzer, der an den Paketzerleger gekoppelt ist, wobei der Nachrichtenzusammensetzer wirksam ist, um den decodierten Datenbereich jedes Pakets zusammenzusetzen, um **dadurch** die decodierten Daten zu erzeugen.

14. Das Datenerfassungsnetzwerk gemäß Anspruch 12, während die Basiskommunikationskomponente (44) weiterhin umfasst:
eine Übertragungskomponente, die angepasst ist, um Steuerdaten zu der Mehrzahl von optischen Scannern (20, 600) hochzuladen, und
eine Empfangskomponente, die angepasst ist, um die Mehrzahl von Paketen (202, 204) von der Mehrzahl der optischen Scanner (20, 600) zu empfangen.

15. Das Datenerfassungsnetzwerk gemäß Anspruch 1, weiterhin umfassend einen Leitrechner (100), der an den Basisanschluss (40) gekoppelt ist, während der Leitrechner (100) angepasst ist, um die decodierten Daten weiterzuverarbeiten.

16. Das Datenerfassungsnetzwerk gemäß Anspruch 15, während der Leitrechner (100) an den Basisanschluss (40) mittels einer RS-232-Datenverbindung (14) gekoppelt ist.

17. Das Datenerfassungsnetzwerk gemäß Anspruch 15, während der Leitrechner (100) an den Basisanschluss (40) mittels eines Keilanschlusses (wedge terminal) gekoppelt ist.

18. Das Datenerfassungsnetzwerk gemäß Anspruch 15, während der Leitrechner (100) an den Basisanschluss (40) mittels eines lokalen Bereichsnetzwerks (LAN) (14) gekoppelt ist.

19. Das Datenerfassungsnetzwerk gemäß Anspruch 15, während der Leitrechner (100) an den Basisanschluss (40) mittels eines universellen seriellen Busses (14) gekoppelt ist.

20. Das Datenerfassungsnetzwerk gemäß Anspruch 1, wobei jedes aus der Mehrzahl der Pakete (202, 204) eine Datenstruktur umfasst, die aufweist:
ein erstes Feld, das einen Identifizierer des optischen Scanners (20, 600) umfasst, wobei der Identifizierer des optischen Scanners (20, 600) einen optischen Scanner (20, 600) identifiziert,
ein zweites Feld, das eine Identifizierer (200) des optischen Symbols umfasst, wobei der Identifizierer (200) des optischen Symbols einen Typ des optischen Symbols identifiziert,
das durch den optischen Scanner (20, 600) decodiert wird, und
ein drittes Feld, das Fehlerprüfinformationen (200) umfasst, wobei die Fehlerprüfinformationen (200) es einer Empfangsbasisstation (40) gestatten, eine empfangene Nachricht auf Fehler zu prüfen.

21. Das Datenerfassungsnetzwerk gemäß Anspruch 20, während die Datenstruktur innerhalb eines Kopfpakets (202) enthalten ist, das an ein Mehrfachpaketübertragungsformat angepasst ist.

22. Das Datenerfassungsnetzwerk gemäß Anspruch 21, während die Datenstruktur innerhalb eines Nichtkopfpakets (204) enthalten ist, das an ein Mehrfachpaketübertragungsformat angepasst ist.

23. Das Datenerfassungsnetzwerk gemäß Anspruch 20, während die Datenstruktur innerhalb eines Pakets (202) enthalten ist, das an ein Einzelpaketübertragungsformat angepasst ist.

24. Das Datenerfassungsnetzwerk gemäß Anspruch 20, während die Datenstruktur ein viertes Feld zum Enthalten von Symboldaten (200) aufweist, wobei die Symboldaten (200) Daten repräsentieren, die in einem optischen Symbol des durch den Identifizierer (200) des optischen Symbols identifizierten Typs enthalten sind.

25. Das Datenerfassungsnetzwerk gemäß Anspruch 1, während die Mehrzahl von optischen Scannern (20, 600) umfasst:
eine Paketanordnungskomponente, die wirksam ist, um decodierte Daten in mindestens ein Paket umzuwandeln und
eine Kommunikationskomponente (30), die an die Paketanordnungskomponente gekoppelt ist, wobei die Kommunikationskomponente wirksam ist, um die Mehrzahl von Paketen (202, 204) an einen Basisanschluss (40) zu übertragen.

26. Das Datenerfassungsnetzwerk gemäß Anspruch 25, während die Mehrzahl von Paketen (202, 204) ein Kopfpaket (202) umfasst.

27. Das Datenerfassungsnetzwerk gemäß Anspruch 26, während das Kopfpaket (202) decodierte Daten umfasst, wenn eine Übertragung zu dem Basisanschluss (40) lediglich ein Paket aufweist.

28. Das Datenerfassungsnetzwerk gemäß Anspruch 27, während das Kopfpaket mindestens einen Identifizierer (200) des optischen Scanners, eine Länge der decodierten Daten und eine Fehlerprüfinformation (200) aufweist.

29. Das Datenerfassungsnetzwerk gemäß Anspruch 26, während die Mehrzahl von Paketen (202, 204) ein Nichtkopfpaket (204) umfasst.

30. Das Datenerfassungsnetzwerk gemäß Anspruch 29, während das Nichtkopfpaket (204) ein Feld umfasst, das einen Typ des 2D optischen codierten Symbols identifiziert, das durch den optischen Scanner (20, 600) gelesen wird.

31. Das Datenerfassungsnetzwerk gemäß Anspruch 30, während das 2D optische codierte Symbol gestapelte lineare Symbole sowie Matrixsymbole umfasst.

32. Das Datenerfassungsnetzwerk gemäß Anspruch 25, während der optische Scanner (20, 600) weiterhin umfasst:
eine Scananordnung (22), die wirksam ist, um das 2D optische codierte Symbol zu lesen,
wodurch das Symbol in ein elektrisches Signal umgewandelt wird, und
eine Decodierkomponente (26), die an die Scananordnung sowie an die Paketanordnungskomponente (26) gekoppelt ist, wobei die Decodierkomponente das elektrische Signal in decodierte Daten umwandelt.

33. Das Datenerfassungsnetzwerk gemäß Anspruch 32, während die Scananordnung (22) eine lineare Scananordnung ist.

34. Das Datenerfassungsnetzwerk gemäß Anspruch 32, während die Scananordnung eine Bereichsscananordnung ist.

35. Das Datenerfassungsnetzwerk gemäß Anspruch 25, während der optische Scanner (20, 600) weiterhin umfasst:
eine Scananordnung, die wirksam ist, um das 2D optische codierte Symbol zu lesen, wodurch das 2D optische codierte Symbol in ein elektrisches Signal umgewandelt wird,
einen Prozessor (24), der an die Scananordnung (22) gekoppelt ist, während der Prozessor programmiert ist, um das elektrische Signal zu decodieren, um **dadurch** decodierte Daten zu erzeugen und um die decodierten Daten in eine Mehrzahl von Paketen (202, 204) zusammenzusetzen,
einen Modulator, der an den Prozessor gekoppelt ist, wobei der Modulator wirksam ist,
um die Mehrzahl von Paketen (202, 204) unter Verwendung eines Übertragungsprotokolls zu modulieren, und
einen Übertrager, der an den Modulator gekoppelt ist, wobei der Übertrager wirksam ist,
um die modulierte Mehrzahl von Paketen (202, 204) über mindestens eine Frequenz zu übertragen.

36. Das Datenerfassungsnetzwerk gemäß Anspruch 25, während das 2D optische codierte Symbol ein Symbol einer portablen Datendatei (PDF) ist.

37. Das Datenerfassungsnetzwerk gemäß Anspruch 36, während das portable Datendateisymbol ein PDF 417 Symbol ist.

38. Das Datenerfassungsnetzwerk gemäß Anspruch 36, während das portable Datendateisymbol ein Mikro-PDF-Symbol ist.

39. Das Datenerfassungsnetzwerk gemäß Anspruch 25, während das portable Datendateisymbol ein Code eins Symbol (Code One Symbol) ist.

40. Das Datenerfassungsnetzwerk gemäß Anspruch 25, während das portable Datendateisymbol ein Datenmatrixsymbol (DataMatrix Symbol) ist.

41. Das Datenerfassungsnetzwerk gemäß Anspruch 25, während das portable Datendateisymbol ein Maxicodesymbol (MaxiCode Symbol) ist.

42. Das Datenerfassungsnetzwerk gemäß Anspruch 1, während die Kommunikationskomponente eine Radiovorrichtung (30) zum Modulieren und Übertragen der Mehrzahl von Paketen (202, 204) in Übereinstimmung mit einem Übertragungsprotokoll umfasst.

43. Ein Verfahren zum Übertragen von Informationen, die in einem optischen Symbol enthalten sind, unter Verwendung eines drahtlosen Netzwerks, während das drahtlose Netzwerk mindestens eine Mehrzahl von schnurlosen optischen Scannern (20) sowie einen Basisanschluss (40) aufweist, wobei das Verfahren umfasst:
Umwandeln eines 2D optischen Symbols in decodierte Daten mittels eines schnurlosen optischen Scanners,
Zusammensetzen der decodierten Daten in eine Mehrzahl von Paketen (202, 204),
Übertragen eines ersten Pakets (202) aus der Mehrzahl von Paketen (202, 204) über einen Radiofrequenzkanal (16) zu dem Basisanschluss (40), während der Basisanschluss (40) an den mindestens einen aus der Mehrzahl der schnurlosen optischen Scanner (20) über den Radiofrequenzkanal (16) gekoppelt ist, und
Empfangen und Wiederzusammensetzen der Mehrzahl von Paketen (202, 204) in decodierte Daten mittels des Basisanschlusses (40), das Verfahren ist **gekennzeichnet durch**:
Ausbilden des ersten Pakets (202) aus der Mehrzahl der Pakete (202, 204), so dass es ein Feld enthält, das die Gesamtlänge der decodierten Daten bestimmt, und
Übermitteln mindestens eines zweiten Pakets aus der Mehrzahl von Paketen (202, 204), das auf das Empfangen einer Bestätigung von dem Basisanschluss (40) reagiert, wobei die Bestätigung die Fähigkeit des Basisanschlusses (40) bestätigt, mindestens ein zweites Paket (204) aus der Mehrzahl der Pakete (202, 204) zu verarbeiten.

## Revendications

1. Réseau de capture de données comprenant :
une pluralité de lecteurs optiques sans fil (20), et
un terminal de base (40) avec un tableau de consultation de paramètres d'application (700) stocké à l'intérieur de celui-ci, le tableau de consultation stockant des paramètres d'application pour chacun de la pluralité des lecteurs optiques sans fil ; dans lequel
au moins un lecteur de la pluralité de lecteurs optiques sans fil (20) est configuré pour convertir un symbole optique 2D en des données décodées, et
pour formater les données décodées en une pluralité de paquets (202, 204),
le au moins un lecteur de la pluralité de lecteurs optiques sans fil (20) est en outre configuré pour transmettre un premier paquet (202) de la pluralité de paquets (202, 204) par le biais d'un canal radiofréquence (16) au terminal de base (40), et
le terminal de base (40) est couplé au au moins un de la pluralité de lecteurs optiques sans fil (20) par le biais du canal radiofréquence (16) ; et dans lequel
le terminal de base (40) est opérationnel pour recevoir et réassembler la pluralité de paquets (202, 204) en des données décodées, le réseau de capture de données étant **caractérisé en ce que**
le premier paquet (202) de la pluralité de paquets (202, 204) contient un champ désignant la longueur totale des données décodées, et
le au moins un lecteur est en outre configuré pour transmettre un au moins un second paquet de la pluralité de paquets (202, 204) de manière sensible pour recevoir une confirmation du terminal de base (40), la confirmation confirmant la capacité du terminal de base (40) à traiter le au moins un second paquet (204) de la pluralité de paquets (202, 204).

2. Réseau de capture de données selon la revendication 1, dans lequel le terminal de base (40) est configuré pour communiquer simultanément avec chacun de la pluralité de lecteurs optiques (20, 600).

3. Réseau de capture de données selon la revendication 2, dans lequel les paramètres d'application comprennent un type de symbole optique 2D qui est décodé par chacun de la pluralité de lecteurs optiques (20, 600).

4. Réseau de capture de données selon la revendication 3, dans lequel le type de symbole optique 2D qui est décodé par le lecteur optique (20, 600) est un symbole Portable Data File (PDF).

5. Lecteur optique (20, 600) selon la revendication 3, dans lequel le type de symbole optique 2D qui est décodé par le lecteur optique (20, 600) est un symbole PDF-417.

6. Lecteur optique (20, 600) selon la revendication 4, dans lequel le type de symbole optique 2D qui est décodé par le lecteur optique (20, 600) est un symbole micro-PDF.

7. Lecteur optique (20, 600) selon la revendication 3, dans lequel le type de symbole optique 2D qui est décodé par le lecteur optique (20, 600) est un symbole Code One.

8. Lecteur optique (20, 600) selon la revendication 3, dans lequel le type de symbole optique 2D qui est décodé par le lecteur optique (20, 600) est un symbole DataMatrix.

9. Lecteur optique (20, 600) selon la revendication 3, dans lequel le type de symbole optique 2D qui est décodé par le lecteur optique (20, 600) est un symbole MaxiCode.

10. Réseau de capture de données selon la revendication 2, dans lequel les paramètres d'application comprennent des données de protocole de transmission.

11. Réseau de capture de données selon la revendication 2, dans lequel les paramètres d'application comprennent des données de vitesse de lecture de lecteur optique (20, 600).

12. Réseau de capture de données selon la revendication 2, dans lequel le terminal de base (40) comprend en outre :
un composant de communications de base (44) opérationnel pour recevoir la pluralité de paquets transmise par la pluralité de lecteurs optiques (20, 600) ;
un processeur de base (48) couplé au composant de communications de base (44), le processeur de base (48) étant programmé pour traiter la pluralité de paquets reçue (202, 204) pour récupérer ainsi les données décodées ; et
une première mémoire de base (50) couplée au processeur de base (48), la première mémoire de base (50) étant opérationnelle pour stocker les données décodées.

13. Réseau de capture de données selon la revendication 12, dans lequel le processeur de base (48) comprend en outre :
un composant interprète de paquet (50), le composant interprète (50) étant opérationnel pour lire au moins un champ informatif du paquet, ce par quoi la pluralité de paquets (202, 204) est traitée conformément aux informations extraites du au moins un champ informatif,
une portion désassembleuse de paquet couplée au composant interprète de paquet (50), le désassembleur de paquet étant opérationnel pour récupérer la portion de données décodées ; et
un assembleur de message couplé au désassembleur de paquet, l'assembleur de message étant opérationnel pour assembler la portion de données décodées de chaque paquet pour produire ainsi les données décodées.

14. Réseau de capture de données selon la revendication 12, dans lequel le composant de communications de base (44) comprend en outre :
un composant émetteur adapté pour charger des données de commande sur la pluralité de lecteurs optiques (20, 600) ; et
un composant récepteur adapté pour recevoir la pluralité de paquets (202, 204) de la pluralité de lecteurs optiques (20, 600).

15. Réseau de capture de données selon la revendication 1, comprenant en outre un ordinateur hôte (100) couplé au terminal de base (40), l'ordinateur hôte (100) étant adapté pour continuer à traiter les données décodées.

16. Réseau de capture de données selon la revendication 15, dans lequel l'ordinateur hôte (100) est couplé au terminal de base (40) au moyen d'une liaison de données RS-232 (14).

17. Réseau de capture de données selon la revendication 15, dans lequel l'ordinateur hôte (100) est couplé au terminal de base (40) au moyen d'un terminal à interface de clavier.

18. Réseau de capture de données selon la revendication 15, dans lequel l'ordinateur hôte (100) est couplé au terminal de base (40) au moyen d'un réseau local (LAN) (14).

19. Réseau de capture de données selon la revendication 15, dans lequel l'ordinateur hôte (100) est couplé au terminal de base (40) au moyen d'un bus sériel universel (14).

20. Réseau de capture de données selon la revendication 1, dans lequel chacun de la pluralité de paquets (202, 204) comprend une structure de données comprenant :
un premier champ comprenant un identificateur de lecteur optique (20, 600), l'identificateur de lecteur optique (20, 600) identifiant un lecteur optique (20, 600) ;
un second champ comprenant un identificateur de symbole optique (200), l'identificateur de symbole optique (200) identifiant un type de symbole optique qui est décodé par le lecteur optique (20, 600) ; et
un troisième champ comprenant des informations de vérification d'erreur (200), les informations de vérification d'erreur (200) permettant à une station de base réceptrice (40) de vérifier si un message reçu a des erreurs.

21. Réseau de capture de données selon la revendication 20, dans lequel la structure de données est comprise à l'intérieur d'un paquet d'en-tête (202) adapté à un format de transmission par paquets multiples.

22. Réseau de capture de données selon la revendication 21, dans lequel la structure de données est comprise à l'intérieur d'un paquet non d'en-tête (204) adapté à un format de transmission par paquets multiples.

23. Réseau de capture de données selon la revendication 20, dans lequel la structure de données est comprise à l'intérieur d'un paquet (202) adapté à un format de transmission par paquet unique.

24. Réseau de capture de données selon la revendication 20, dans lequel la structure de données comprend un quatrième champ pour contenir des données de symbole (200), les données de symbole (200) représentant des données contenues dans un symbole optique du type identifié par l'identificateur de symbole optique (200).

25. Réseau de capture de données selon la revendication 1, dans lequel la pluralité de lecteurs optiques (20, 600) comprend :
un composant d'assemblage de paquet opérationnel pour convertir les données décodées en au moins un paquet ; et
un composant de communications (30) couplé au composant d'assemblage de paquet, le composant de communications étant opérationnel pour transmettre la pluralité de paquets (202, 204) à un terminal de base (40).

26. Réseau de capture de données selon la revendication 25, dans lequel la pluralité de paquets (202, 204) comprend un paquet d'en-tête (202).

27. Réseau de capture de données selon la revendication 26, dans lequel le paquet d'en-tête (202) comprend des données décodées si une transmission vers le terminal de base (40) ne comprend qu'un paquet.

28. Réseau de capture de données selon la revendication 27, dans lequel le paquet d'en-tête comprend au moins un identificateur de lecteur optique (200), une longueur des données décodées, et des informations de vérification d'erreur (200).

29. Réseau de capture de données selon la revendication 26, dans lequel la pluralité de paquets (202, 204) comprend un paquet non d'en-tête (204).

30. Réseau de capture de données selon la revendication 29, dans lequel le paquet non d'en-tête (204) comprend un champ identifiant un type de symbole encodé de manière optique en 2D qui est lu par le lecteur optique (20, 600).

31. Réseau de capture de données selon la revendication 30, dans lequel le symbole encodé de manière optique en 2D comprend des symboles linéaires et des symboles matriciels empilés.

32. Réseau de capture de données selon la revendication 25, dans lequel le lecteur optique (20, 600) comprend en outre :
un ensemble de lecture (22) opérationnel pour lire le symbole encodé de manière optique en 2D, ce par quoi le symbole est converti en un signal électrique ; et
un composant de décodage (26) couplé à l'ensemble de lecture et le composant d'assemblage de paquet (26), le composant de décodage convertissant le signal électrique en données décodées.

33. Réseau de capture de données selon la revendication 32, dans lequel l'ensemble de lecture (22) est un ensemble de lecture linéaire.

34. Réseau de capture de données selon la revendication 32, dans lequel l'ensemble de lecture est un ensemble de lecture de surface.

35. Réseau de capture de données selon la revendication 25, dans lequel le lecteur optique (20, 600) comprend en outre :
un ensemble de lecture opérationnel pour lire le symbole encodé de manière optique en 2D, ce par quoi le symbole encodé de manière optique en 2D est converti en un signal électrique ;
un processeur (24) couplé à l'ensemble de lecture (22), le processeur étant programmé pour décoder le signal électrique pour produire ainsi des données décodées, assembler les données décodées en une pluralité de paquets (202, 204) ;
un modulateur couplé au processeur, le modulateur étant opérationnel pour moduler la pluralité de paquets (202, 204) en utilisant un protocole de transmission ; et
un émetteur couplé au modulateur, l'émetteur étant opérationnel pour transmettre la pluralité modulée de paquets (202, 204) sur au moins une fréquence.

36. Réseau de capture de données selon la revendication 25, dans lequel le symbole encodé de manière optique en 2D est un symbole Portable Data File (PDF).

37. Réseau de capture de données selon la revendication 36, dans lequel le symbole Portable Data File est un symbole PDF-417.

38. Réseau de capture de données selon la revendication 36, dans lequel le symbole Portable Data File est un symbole micro-PDF.

39. Réseau de capture de données selon la revendication 25, dans lequel le symbole Portable Data File est un symbole Code One.

40. Réseau de capture de données selon la revendication 25, dans lequel le symbole Portable Data File est un symbole DataMatrix.

41. Réseau de capture de données selon la revendication 25, dans lequel le symbole Portable Data File est un symbole MaxiCode.

42. Réseau de capture de données selon la revendication 1, dans lequel le composant de communications comprend un dispositif radio (30) pour moduler et transmettre la pluralité de paquets (202, 204) conformément à un protocole de transmission.

43. Procédé de transmission d'informations contenues dans un symbole optique utilisant un réseau sans fil, le réseau sans fil comprenant au moins une pluralité de lecteurs optiques sans fil (20) et un terminal de base (40), le procédé comprenant :
convertir un symbole optique 2D en données décodées au moyen d'un lecteur optique sans fil ;
assembler les données décodées en une pluralité de paquets (202, 204) ;
transférer un premier paquet (202) de la pluralité de paquets (202, 204) par le biais d'un canal radiofréquence (16) au terminal de base (40), dans lequel le terminal de base (40) est couplé au au moins un de la pluralité de lecteurs optiques sans fil (20) par le biais du canal radiofréquence (16) ; et
recevoir et réassembler la pluralité de paquets (202, 204) en données décodées au moyen du terminal de base (40), le procédé étant **caractérisée par**
former le premier paquet (202) de la pluralité de paquets (202, 204) de sorte qu'il contient un champ désignant la longueur totale des données décodées, et
transmettre le au moins un second paquet de la pluralité de paquets (202, 204) de manière sensible pour recevoir une confirmation du terminal de base (40), la confirmation confirmant la capacité du terminal de base (40) à traiter au moins un second paquet (204) de la pluralité de paquets (202, 204).
